Europäisches Patentamt

European Patent Office

Office européen des brevets

(11) Numéro de publication: **0 348 267**

**A1**

## (12) DEMANDE DE BREVET EUROPEEN

(21) Numéro de dépôt: **89401622.9**

(22) Date de dépôt: **12.06.89**

(51) Int. Cl.⁴: **F 16 J 15/32**

(30) Priorité: **14.06.88 FR 8807930**

(43) Date de publication de la demande:
**27.12.89 Bulletin 89/52**

(84) Etats contractants désignés:
**BE CH DE ES GB IT LI LU SE**

(71) Demandeur: **HYDRO RENE LEDUC (Société Anonyme)
Allée René Leduc Azerailles
F-54120 Baccarat (FR)**

(72) Inventeur: **Porel, Louis-Claude
Rue de Moulins Jeanmenil
F-88700 Rambervillers (FR)**

(74) Mandataire: **Loyer, Bertrand et al
Cabinet Pierre Loyer 77, rue Boissière
F-75116 Paris (FR)**

(54) Joints composites pour circuits hydrauliques.

(57) Le joint est constitué par l'association d'un anneau de frottement (2) en matière dure ayant de bonnes caractéristiques de résistance au frottement et d'un anneau (1) en matière souple, les deux anneaux (1, 2) étant ancrés l'un à l'autre au moyen d'alvéoles pratiquées dans la face de l'anneau (2) en matière dure en contact avec la matière souple (1), caractérisé par le fait que lesdites alvéoles sont constituées par des rainures (8), non débouchantes, parallèles à l'axe de rotation, et que l'anneau en matière souple (1) comporte, venues de moulage, des nervures (7) ayant pratiquement la même largeur et la même hauteur que lesdites rainures (8), mais une longueur (V) inférieure.

Fig. 1

EP 0 348 267 A1

**Description**

**Joints composites pour circuits hydrauliques**

La présente invention est relative a des joints composites pour circuits hydrauliques.

Dans le brevet français 1.049.256 du 18 janvier 1951, au nom de Monsieur René LEDUC, on a décrit un joint composite constitué par l'assemblage, l'un sur l'autre, d'un anneau en matière dure, ayant de bonnes qualités de frottement et d'un anneau en matière élastique, ce dernier se déformant sous l'action de la pression hydraulique et appliquant fortement l'anneau en matière dure contre la surface sur laquelle il frotte.

Dans le brevet 2.138.311 du 24 mai 1971, au nom de la société René LEDUC et Fils, on a décrit un perfectionnement destiné à empêcher tout glissement relatif de l'un des anneaux par rapport à l'autre. Ce perfectionnement consiste à ménager dans la face de l'anneau en matière dure, qui se trouve en contact avec l'anneau en matière élastique, une pluralité de petites alvéoles, de façon que, sous l'effet de la pression hydraulique, la matière élastique flue dans les alvéoles, ce qui ancre cette matière élastique dans la matière dure.

Dans le certificat d'addition n° 2.538.871, on a décrit deux perfectionnements : un premier selon lequel l'anneau de frottement en matière dure est pourvu sur ses deux faces de gorges périphériques ; et un deuxième perfectionnement selon lequel l'anneau en matière dure est percé d'orifices le traversant de part en part ; de sorte que l'extrémité de chaque orifice en contact avec la pièce métallique retienne du liquide hydraulique, son autre extrémité servant d'alvéole d'ancrage pour la matière molle et ductile.

Il s'est avéré à l'usage que pour les pièces en mouvement relatif de rotation, la première disposition n'était pas une amélioration, bien au contraire, car les gorges périphériques permettent aux deux anneaux de glisser en rotation l'un par rapport à l'autre. Par contre, la deuxième disposition donne un meilleur ancrage que celui des alvéoles selon le brevet 2.138.311 car il peut arriver que ces alvéoles ne soient pas assez profondes ou qu'elles aient des flancs trop ouverts.

Cependant, toutes ces techniques font appel à un ancrage par pliage d'une matière molle dans des évidements pratiqués dans une matière dure et il peut donc arriver que l'on obtienne un mauvais ancrage lorsque le fluage de la matière ductile est insuffisant. Ceci peut se produire lorsque la pression est insuffisante et/ou lorsque la matière plus molle n'est pas assez ductile.

La présente invention a pour objet des moyens permettant d'obtenir un ancrage positif en rotation même en l'absence de toute pression et même si le caoutchouc employé est peu ductile tout en pouvant supporter sans inconvénients des pressions hydrauliques de l'ordre de 700 à 800 bars.

La présente invention concerne un joint d'étanchéité pour pièces d'équipements hydrauliques en mouvement relatif tournant, du type constitué par l'association d'un anneau de frottement en matière dure ayant de bonnes caractéristiques de résistance au frottement et d'un anneau en matière plus souple, les deux anneaux étant ancrés l'un à l'autre au moyen d'alvéoles pratiquées dans la face de l'anneau en matière dure en contact avec la matière plus souple, caractérisé par le fait que lesdites alvéoles sont constituées par des rainures non débouchantes parallèles à l'axe de rotation des pièces et que l'anneau en matière plus souple comporte, venues de moulage, des nervures ayant pratiquement la même largeur et la même hauteur que les rainures mais une longueur inférieure, lesdites nervures s'encastrant dans lesdites rainures pour solidariser en rotation les deux anneaux.

La présente invention comporte également les dispositions suivantes :

1° - On peut prévoir des rainures semblables dans le fond de la gorge recevant l'anneau en matière plus souple et des nervures sur la face de l'anneau en contact avec le fond de gorge.

2° - On ménage, de chaque côté des nervures et des rainures des zones d'étanchéité planes et lisses pour empêcher que le liquide hydraulique ne pénètre dans les rainures.

A titre d'exemples non limitatifs et pour illustrer l'invention, on a représenté aux dessins annexés :

Figures 1 et 2 deux vues schématiques en coupe à grande échelle d'un joint mâle selon l'invention soumis à la haute pression côté droit (figure 1) et côté gauche (figure 2) ;

Figure 3 une vue partielle en coupe selon AA de la figure 1 ;

Figure 4, une vue d'une variante de la figure 2;

Figure 5, une vue schématique en coupe d'un joint femelle, selon l'invention;

Figure 6, une vue partielle en coupe selon BB de la figure 5.

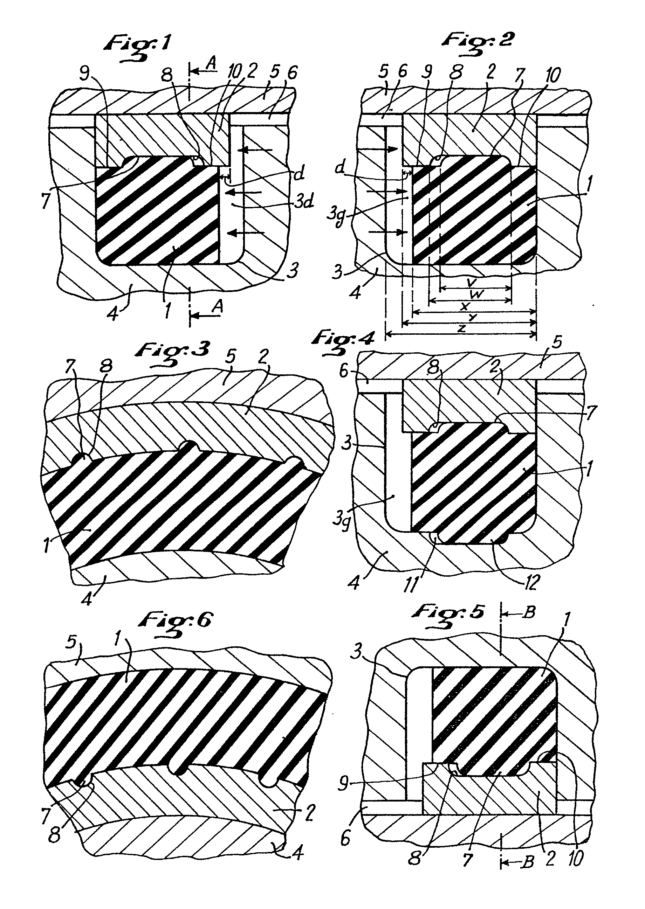

Les figures 1 à 4 représentent un joint mâle. Ce joint est constitué par la superposition d'un anneau interne 1, en matière relativement souple, telle que du caoutchouc, et d'un externe 2 en une matière dure ayant de bonnes qualités de frottement, comme par exemple du nylon ou du téflon.

Le joint composite 1-2 est placé dans une gorge circulaire 3 creusée dans une pièce 4. La face externe de l'anneau 2 frotte contre la paroi d'une pièce 5. Les pièces 4 et 5 sont en mouvement relatif de rotation autour d'un axe.

Le liquide hydraulique sous pression arrive par le faible interstice 6 existant entre les pièces 4 et 5 et pénètre dans la gorge 3. La pression du liquide hydraulique écrase la matière de l'anneau 1, ce qui applique fortement l'anneau 2 contre la paroi de la pièce 5.

Cependant, comme on le comprend en examinant comparativement les figures 1 et 2, la pression hydraulique n'écrase pas, ou pratiquement pas la matière de l'anneau 2. Il en résulte que pratiquement toute la masse de l'anneau 1 se déplace transversalement par rapport à l'anneau 2. Sur la figure 1, la pression s'exerce sur le côté droit du joint composite, dans le volume 3d : la paroi gauche de l'anneau 1 est en correspondance avec la paroi gauche de l'anneau 2, ces deux parois étant appliquées contre la paroi gauche de la gorge 3 ; par contre la paroi droite de l'anneau 1 est décalée d'une distance "d" par rapport à la paroi droite de l'anneau 2, cette distance "d" variant avec l'importance de la pression hydraulique appliquée en 3d.

La figure 2 illustre les positions relatives des pièces lorsque la pression s'exerce sur le côté gauche du joint composite, dans le volume 3g. Dans ce cas, ce sont les parois droite des anneaux 1 et 2 qui sont appliquées contre la paroi droite de la gorge 3 et sont donc alignées ; tandis que leurs parois gauche sont décalées.

Pour assurer une bonne solidarisation entre les anneaux 1 et 2 dans le sens transversal (qui correspond à une rotation des pièces 4 et 5 l'une par rapport à l'autre), sans qu'il soit nécessaire que cette solidarisation dépende des aptitudes au fluage de la matière dont l'anneau 1 est constitué, on fabrique l'anneau 1 par moulage en le munissant de nervures 7 et on pratique dans la face en contact de l'anneau 2 des rainures 8. Les nervures 7 et les rainures 8 sont parallèles à l'axe de rotation des pièces et sont disposées de façon à ce que les nervures 7 s'emboitent dans les rainures 8. Pour permettre les déplacements vers la gauche ou vers la droite des nervures 7 dans les rainures 8, la longueur V des nervures 7 est inférieure à celle W des rainures 8.

Comme visible à la figure 3, les rainures 8 et les nervures 7 sont prévues d'une dimension circonférentielle limitée mais telle que lesdites nervures 7 soient aisées tant à fabriquer par moulage qu'à mettre en place.

D'autre part, comme cela est représenté aux figures 1 et 2, il est impératif que les rainures 8 ne débouchent pas dans la gorge 3, ni d'un côté ni de l'autre parce qu'il faut éviter que le liquide hydraulique se trouvant en 3d ou 3g ne pénètre dans les rainures 8 car cela risquerait de provoquer une séparation des deux anneaux. On ménage donc de chaque côté des nervures 7 et des rainures 8 des zones d'étanchéité 9, 10 où les surfaces en contact des deux anneaux sont lisses ; de façon à être intimément appliquée l'une contre l'autre sans qu'il soit possible au liquide hydraulique de s'y immiscer.

La figure 4 représente une variante de réalisation consistant à ménager dans le fond de la gorge 3 des rainures 11 destinées à recevoir des nervures correspondantes 12 venues de moulage dans l'autre face de l'anneau 1. Pour les mêmes raisons indiquées plus haut, la longueur des nervures est inférieure à celles des rainures pour que les nervures ne sortent pas hors des rainures lorsque l'anneau 1 se déplace latéralement du fait d'un changement du côté d'application de la pression. Des zones d'étanchéité analogues aux zones 9 et 10 sont ménagées de part et d'autre des nervures 11 et des rainures 12.

Les figures 5 et 6 représentent les mêmes dispositions mais inversées pour des joints femelles.

## Revendications

1. Joint d'étanchéité pour pièces d'équipements hydrauliques en mouvement relatif tournant , du type constitué par l'association d'un anneau de frottement (2) en matière dure ayant de bonnes caractéristiques de résistance au frottement et d'un anneau (1) en matière plus souple, les deux anneaux (1, 2) étant ancrés l'un à l'autre au moyen d'alvéoles pratiquées dans la face de l'anneau (2) en matière dure en contact avec la matière plus souple (1), caractérisé par le fait que lesdites alvéoles sont constituées par des rainures (8), non débouchantes, parallèles à l'axe de rotation, et que l'anneau en matière plus souple (1) comporte, venues de moulage, des nervures (7) ayant pratiquement la même largeur et la même hauteur que lesdites rainures (8), mais une longueur (V) inférieure; lesdites nervures s'encastrant dans lesdites rainures pour solidariser en rotation les deux anneaux.

2. Joint d'étanchéité selon la revendication 1, caractérisé par le fait que le fond de la gorge (3) recevant l'anneau (1) en matière souple comporte des rainures (11), non débouchantes, la face de l'anneau (1) en contact avec le fond de la gorge (3) comportant des nervures (12), venues de moulage, ayant même largeur et même hauteur que lesdites rainures (11) mais une longueur inférieure.

3. Joint selon les revendications 1 ou 2, comportant de chaque côté des nervures (7, 11) et des rainures (8, 12), des zones d'étanchéité plates et lisses (9, 10) de façon que le liquide hydraulique ne puisse pas pénétrer dans les rainures (8, 12).

Fig. 1

Fig. 2

Fig. 3

Fig. 4

Fig. 6

Fig. 5

**Europäisches Patentamt**

# EUROPÄISCHER RECHERCHENBERICHT

Nummer der Anmeldung

EP 89 40 1622

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 054 146 (CHOURY) <br> * En entier * <br> --- | 1,2 | F 16 J 15/32 |
| Y | FR-A-2 254 990 (ELECTRA-UNIC) <br> * En entier * <br> ----- | 1-3 | |

| | | | RECHERCHIERTE SACHGEBIETE (Int. Cl.4) |
|---|---|---|---|
| | | | F 16 J |

Der vorliegende Recherchenbericht wurde für alle Patentansprüche erstellt

| Recherchenort | Abschlußdatum der Recherche | Prüfer |
|---|---|---|
| DEN HAAG | 06-10-1989 | LEGER M.G.M. |